# FASCICULE DE BREVET EUROPEEN

(11) **EP 1 095 318 B1**
(45) Date de publication et mention de la délivrance du brevet: **20.04.2005**
(21) Numéro de dépôt: 99959129.0
(22) Date de dépôt: 30.06.1999
(51) Int. Cl.: G04B 47/06, G01C 21/02

(54) **MONTRE MUNIE DE MOYENS POUR DEFINIR LA LONGITUDE D'UN LIEU**
UHR MIT MITTELN ZUR BESTIMMUNG DER GEOGRAPHISCHEN LÄNGE EINES ORTES
WATCH EQUIPPED WITH MEANS FOR DETERMINING A LOCATION LONGITUDE

(30) Priorité: 06.07.1998 FR 9808712
(43) Date de publication de la demande: 02.05.2001
(73) Titulaire: The British Masters SA, 2300 La Chaux-de-Fonds (CH)
(72) Inventeur: LOTH, Eric, A., CH-2504 Bienne (CH); FINAZZI, Pierre-André, CH-2300 La Chaux-de-Fonds (CH)
(74) Mandataire: Gresset, Jean
(86) Numéro de dépôt international: PCT/CH1999/000283
(87) Numéro de publication internationale: WO 2000/002101

(56) Documents cités:
- DE-A- 2 510 484
- FR-A- 460 311
- FR-A- 852 214
- US-A- 2 560 618

## Description

La présente invention se rapporte à une montre destinée à définir la longitude d'un lieu. De telles montres sont bien connues de l'homme du métier. L'une d'elles est décrite dans le brevet CH 184 338. Elle comporte trois aiguilles se déplaçant chacune en regard d'un cadran circulaire gradué. Les aiguilles et les cadrans sont concentriques. Le premier cadran porte une échelle dont chaque division correspond à 1° d'arc, placé en regard d'une aiguille effectuant un tour en 40 minutes. Le deuxième cadran porte une graduation de 36 divisions dont chacune correspond à 10° d'arc et placé en regard d'une aiguille effectuant un tour en 24 heures. Le troisième cadran porte une graduation de 60 divisions correspondant chacune à une minute d'arc et placé en regard d'une aiguille effectuant un tour en quatre minutes de temps. La montre comporte, en outre, une bague pour modifier la position des cadrans afin de permettre la correction relative à l'équation du temps. Elle était, par exemple, destinée aux aviateurs pour leur permettre de connaître leur position. Elle autorise une détermination précise de la longitude, mais n'est guère propice à la lecture de l'heure. Elle doit en effet rester réglée à l'heure du lieu de départ. Par ailleurs, les aiguilles tournent à une vitesse angulaire inusitée.

Le brevet FR 852 214 se rapporte à une montre comportant deux disques affichant l'heure et la minute.

Un troisième disque, concentrique, permet de déterminer la longitude, dans la mesure où l'on connaît l'heure vraie du lieu considéré.

Les documents DE 25 104 84 et US 2.560.618 décrivent des dispositifs pour déterminer la longitude et la latitude d'un lieu. Ces dispositifs ne peuvent être associés à une montre.

Enfin, le brevet FR 460 311 décrit un instrument d'astronomie permettant de faire le point, d'assurer le suivi d'un astre, etc.

Aujourd'hui, le système GPS permet de définir la position d'un lieu avec une précision nettement supérieure à celle atteinte avec une pièce d'horlogerie conventionnelle. Les personnes qui doivent donc connaître leur position avec précision peuvent utiliser ce système sans problème. Par contre, il n'existe pas de moyen simple d'usage et permettant d'expliquer et de comprendre ce qu'est la longitude et comment elle peut être déterminée en référence au temps, et au déplacement du Soleil relativement à la Terre. Pour assurer ces fonctions, il est nécessaire de pouvoir disposer d'un objet d'usage courant, impliquant des manipulations simples et facilement compréhensibles et dont la lecture est aisée.

La présente invention se rapporte à une montre d'usage courant, qui comporte un mobile effectuant un tour en 12 heures et portant une aiguille des heures, un mobile effectuant un tour en une heure et portant une aiguille des minutes, et un cadran. Son but principal est de permettre une lecture facile de l'heure et de déterminer la longitude d'un lieu de manière simple et aisément compréhensible.

Ce but est atteint grâce au fait que la montre selon l'invention comporte une bague tournante pour la lecture de la longitude, portant un repère et, à partir de celui-ci, une échelle en degrés couvrant un angle de 180° sur l'ensemble de son pourtour et que le cadran est muni d'une échelle circulaire pour la sélection du fuseau horaire, avec un point médian correspondant au point supérieur du cadran et une graduation couvrant 12 heures sur l'ensemble de son pourtour, la valeur de la graduation de l'échelle en degrés étant égale à 15 fois la valeur de la graduation de l'échelle en heures pour les valeurs se trouvant en regard les unes des autres, lorsque le repère coïncide avec le point médian.

De manière avantageuse, l'échelle de la bague, exprimée en degrés, s'étend de 0° à 90° de part et d'autre du repère, et l'échelle circulaire, portée par le cadran et destinée à la sélection d'un fuseau horaire, porte une graduation allant de 0 à + 6 heures ou - 6 heures à partir du point médian, selon le sens de rotation.

Dès lors qu'on mesure la longitude avec une seule aiguille, celle des heures, il est nécessaire que l'échelle soit la plus grande possible. Or, dans la montre, cette aiguille est généralement la plus courte. Pour palier cet inconvénient, la bague entoure le cadran de manière à disposer d'une échelle la plus grande possible, et l'aiguille des heures est prolongée par une flèche jusqu'au voisinage de la bague, sa longueur étant supérieure à celle de l'aiguille des minutes. De la sorte, la longitude peut être lue avec une bonne précision. En outre, l'extrémité de l'aiguille des heures n'est jamais masquée par l'aiguille des minutes. Il est ainsi possible de lire la longitude même lorsque l'aiguille des minutes est superposée à l'aiguille des heures.

Pour pouvoir définir la longitude avec une certaine précision, il est nécessaire de tenir compte de la différence entre le temps moyen et le temps solaire vrai, appelée équation du temps. A cet effet, dans un mode particulier de réalisation, la montre comporte une surface d'affichage en coordonnées polaires, avec une indication angulaire des mois et des jours de l'année et une indication radiale sous forme de courbe relative à l'équation du temps, et un index monté mobile en rotation en regard de la surface d'affichage et portant une échelle de lecture pour déterminer l'équation du temps. L'index est avantageusement monté pivotant dans le fond de la montre.

Pour définir la longitude, il est nécessaire de connaître le décalage angulaire du Soleil dans sa course à partir de la différence temporelle correspondant à l'équation du temps. Pour simplifier la lecture, l'index comporte deux bras, diamétralement opposés, dont l'un porte une échelle en degrés d'angles et l'autre une échelle en minutes de temps.

La précision de la lecture de la longitude dépend de celle assurée lors de l'introduction de la correction que nécessite l'équation du temps. Dans ce but, la bague comporte des index définissant des fractions de degrés pour des valeurs comprises entre ± 5° de part et d'autre du repère.

La précision de lecture de la longitude peut être améliorée en utilisant le principe du vernier. A cet effet, le cadran et la bague d'une part, la bague et l'aiguille des heures d'autre part portent chacun une échelle pour définir deux verniers permettant respectivement d'introduire la correction de l'équation du temps et de lire la longitude de manière plus précise.

La détermination de la longitude nécessite la connaissance de l'orientation du plan méridien. Cette information peut être donnée, au moins approximativement, par une montre munie d'une boussole solaire, comportant un disque effectuant un tour en 24 heures, en synchronisme avec l'aiguille des heures et portant des informations relatives aux points cardinaux.

La définition du passage du Soleil au méridien est difficile sans boussole. Or, l'information donnée par une boussole solaire ne peut qu'être approximative, tant qu'on ne connaît pas la longitude du lieu. L'adjonction d'une boussole magnétique prend beaucoup de place et manque de précision, à cause du décalage entre le pôle magnétique et le pôle géographique. Pour lever cette difficulté, la présente invention se rapporte également à un dispositif pour la détermination de la hauteur du Soleil sur l'horizon. En effet, par définition même, le passage du Soleil au méridien correspond à sa plus grande hauteur sur l'horizon.

Une solution consiste à utiliser le principe du gnomon, c'est-à-dire à disposer une tige verticalement et définir quand l'ombre est la plus courte. Ce mode de faire est peu sûr, car si la tige n'est pas parfaitement verticale, il peut en résulter une grande différence entre le moment où l'ombre est la plus courte et le passage réel au méridien. Il existe d'autres moyens, par exemple le théodolite, pour effectuer une mesure plus précise. Ces moyens sont toutefois volumineux et coûteux.

La présente invention a également pour but de permettre la détermination de la hauteur du Soleil sur l'horizon, avec des moyens peu coûteux, de petites dimensions et même intégrables dans une montre. A cet effet, la montre selon l'invention est munie d'un dispositif comprenant un diaphragme pour définir un rayon lumineux de faible section et une surface dépolie sur laquelle le rayon est projeté.

Dans un mode particulier de réalisation, le dispositif comporte un corps en matériau transparent, de forme sensiblement prismatique, avec deux faces opposées, sensiblement parallèles et une face oblique reliant les deux faces opposées et qui comporte une ouverture transparente, sensiblement centrale et destinée à laisser un rayon lumineux pénétrer dans le corps, entourée d'une surface opaque, dans lequel les faces opposées sont agencées de manière à réfléchir le rayon. Dans ce dispositif, l'une des faces opposées comporte une surface dépolie et une échelle en regard de la surface, pour évaluer le mouvement du Soleil sur l'horizon. Une telle solution ne permet certes pas une mesure absolue de la hauteur du Soleil; on peut toutefois définir avec une bonne précision le moment où il atteint son apogée. Cela est rendu possible grâce au fait que le rayon du soleil est réfléchi plusieurs fois à l'intérieur du dispositif, ce qui permet d'amplifier le mouvement linéaire et le rendre ainsi perceptible.

Un tel dispositif associé à une montre pourrait être rapidement rayé selon le matériau utilisé. Ce problème peut être évité en le réalisant en verre trempé ou en saphir.

Pour que ce dispositif puisse pleinement remplir sa fonction, il est souhaitable qu'il soit, en permanence, associé à la montre et utilisable simultanément à la lecture du cadran. A cet effet, la présente invention se rapporte également à une montre munie d'un bracelet auquel le dispositif est associé.

D'autres avantages et caractéristiques de l'invention ressortiront de la description qui va suivre, faite en regard du dessin annexé, dans lequel:
- les figures 1 et 2 représentent, en plan, une montre selon l'invention, affichant deux états différents,
- la figure 3 est une vue partielle, en coupe, de la montre des figures 1 et 2,
- la figure 4 montre, en plan, le fond de la montre des figures 1 à 3, et
- la figure 5 illustre un dispositif pour la mesure de la hauteur du Soleil sur l'horizon.

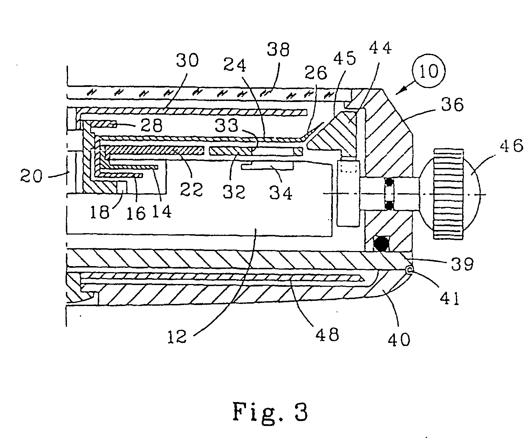

Ainsi qu'on peut le voir tout particulièrement sur la figure 3, la montre seion l'invention comporte une boîte 10, contenant un mouvement de montre 12 de conception tout à fait classique et muni de mobiles 14, 16, 18 et 20, représentés schématiquement et effectuant respectivement un tour en 24 heures, en 12 heures, en 60 minutes et en 60 secondes.

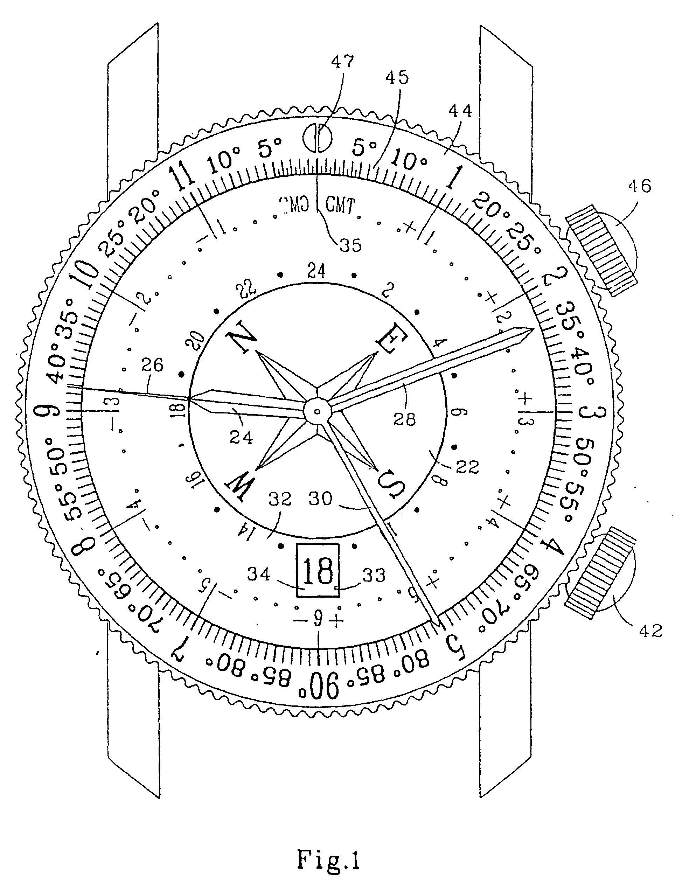

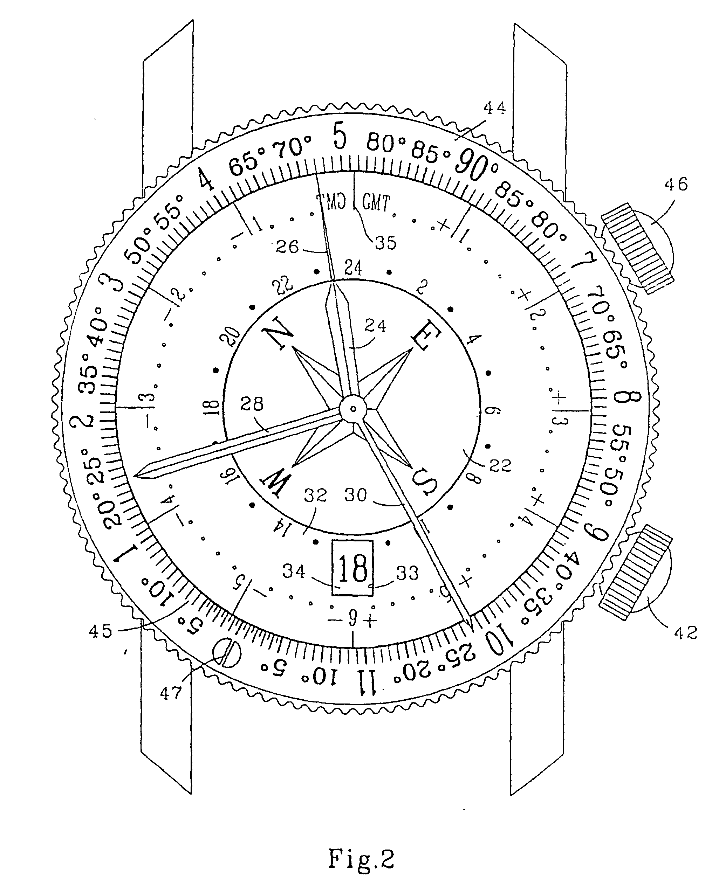

Chacun de ces mobiles porte un organe d'affichage. Plus précisément, le mobile 14 porte un disque 22, muni des indications N - S (Figures 1 et 2) diamétralement opposées, ayant une fonction de boussole solaire, ainsi que cela sera expliqué ultérieurement.

Le mobile 16 porte une aiguille des heures 24 effectuant, de manière classique, deux tours par jours. L'aiguille 24 est munie d'une flèche 26 dont l'utilité sera précisée ci-après. Les mobiles 18 et 20 portent respectivement des aiguilles de minutes 28 et de secondes 30.

Le mouvement 12 porte, en outre, un cadran 32 muni d'un guichet 33 et un disque de quantième 34 visible au travers de ce guichet.

Le cadran 32 comprend une indication 35 comportant, à midi, les lettres GMT et, de part et d'autre, réparti sur un demi-cercle, les chiffres de 1 à 6, avec le signe + dans le sens horaire et - dans le sens antihoraire (Figures 1 et 2).

L'indication 35 permet de spécifier à quel fuseau horaire se rapporte l'heure affichée.

La boîte 10 est munie, de manière classique, d'une carrure 36, d'une glace 38, d'un fond comportant deux parties 39 et 40 reliées entre elles par une charnière 41, et d'une tige de mise à l'heure 42. Elle porte, de plus, une bague tournante 44 et une couronne 46 de commande de la bague tournante 44. Cette dernière est munie d'une échelle de longitude 45, en degrés, partant d'une origine 47 et s'étendant sur un demi-cercle, aussi bien dans le sens horaire que dans le sens anti-horaire, chaque demi-cercle correspondant à 90° de longitude.

En variante, il est également possible d'avoir des échelles dissymétriques. Dans tous les cas, la bague 44 porte une échelle couvrant un angle de 180° sur l'ensemble de son pourtour èt l'échelle 33 du cadran comporte une graduation couvrant 12 heures sur l'ensemble de son pourtour, la graduation de l'échelle en degrés étant égale à 15 fois la graduation de l'échelle en heures pour les valeurs se trouvant en regard les unes des autres, lorsque le repère 47 coïncide avec le point médian 35.

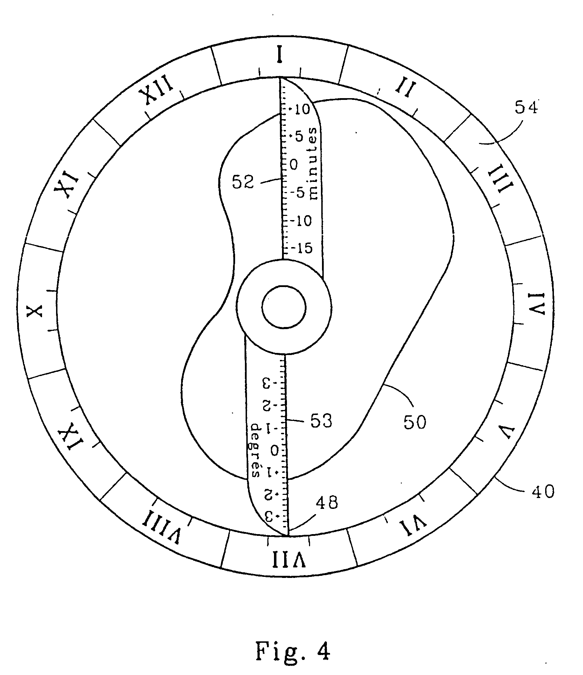

Ainsi qu'on peut le voir de manière schématique sur la figure 4, la partie 40 du fond porte un index 48, monté pivotant à friction, et une courbe 50, insculpée, et correspondant à l'équation du temps représentée en coordonnées polaires. L'index 48 comprend deux bras munis respectivement d'une échelle 52 graduée en minutes de temps et d'une échelle 53 graduée en degrés d'arc. Le fond porte une indication du calendrier 54 gravée sur un cercle entourant la courbe 50 et pouvant être balayée par l'extrémité de l'index 48. La date correspond donc à la coordonnée angulaire et l'équation du temps à la coordonnée radiale.

Pour accéder à ces informations, l'utilisateur doit ouvrir le fond en soulevant la partie 40. Cela peut avantageusement se faire au moyen d'un système dit à secret, tel qu'utilisé dans les montres de type Lépine.

La montre, telle que décrite et représentée, permet plusieurs fonctions complémentaires aux fonctions horaires classiques, soit la détermination approximative du plan méridien, la définition de la longitude et la définition de l'équation du temps.

Le plan méridien, qui est un plan vertical passant par l'axe Nord - Sud en un lieu donné, est indiqué de manière approximative par les indications N-S portées par le disque 22 lorsque l'aiguille des heures 24 est pointée vers le Soleil. Une telle construction est appelée boussole solaire.

Pour que le plan méridien soit défini de manière précise, il faudrait que la montre affiche l'heure solaire du lieu et prenne en compte l'équation du temps. L'indication donnée ne suffit donc pas pour mesurer la longitude.

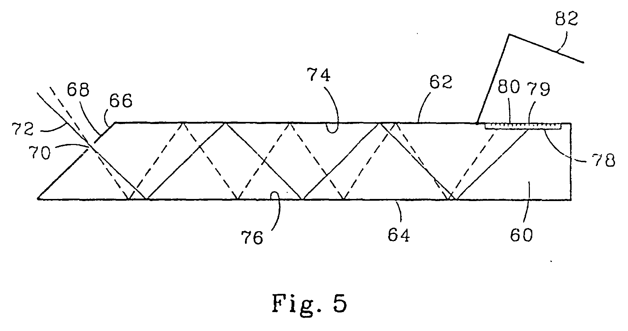

Le dispositif représenté à la figure 5 permet de déterminer l'apogée du Soleil avec une précision comparable à celle obtenue dans la détermination de la longitude. Il comporte un corps de forme prismatique 60 avec deux faces parallèles 62 et 64 et une face oblique 66 reliant les deux faces parallèles 62 et 64.

La face oblique 66 est partiellement recouverte d'une couche opaque 68, définissant une fente sensiblement centrale 70 ayant une fonction de diaphragme. Cette fente 70 est destinée à laisser passer un rayon lumineux représenté en 72 et provenant du Soleil. Les faces opposées 62 et 64 sont agencées de manière à réfléchir le rayon 72. Elles portent, par exemple, des couches métalliques 74 et 76. La face supérieure 62 n'est que partiellement recouverte. Elle comporte une surface dépolie 78, à son extrémité opposée au côté 66, au travers de laquelle le rayon 72 ressort du corps 60 et forme une image 79 en un point fonction de la hauteur du Soleil sur l'horizon. Une échelle graduée 80 est placée à côté de la surface dépolie 28, de manière à pouvoir détecter le déplacement de l'image sur la surface dépolie. Un pare-soleil 82 masque partiellement la surface 78, de manière que l'image 79 de l'ouverture 70 soit visible sur la surface dépolie 78. Ce dispositif est avantageusement réalisé en verre trempé ou en saphir, afin d'éviter qu'il ne se raye.

En dimensionnant le dispositif ci-dessus de manière qu'il ait une épaisseur de 3 mm pour une longueur de 20 mm environ, avec une inclinaison du côté 66 voisine de 45 degrés, une variation de la hauteur du Soleil de 1 degré correspond sensiblement à un déplacement de l'image 79 de 1 mm.

D'autres solutions similaires sont envisageables pour effectuer cette fonction. Le dispositif comportera, toutefois, au moins un diaphragme pour définir un rayon lumineux de section adéquate, une surface dépolie sur laquelle le rayon est projeté et un repert pour évaluer le déplacement du Soleil. La présence d'une surface réfléchissante dans le chemin compris entre le diaphragme et la surface dépolie permet de disposer d'une structure plus compact. Afin d'éviter que l'éclairement du Soleil ne rende difficile la perception de l'image sur la surface dépolie, il est avantageux de prévoir un pare-soleil.

Avant d'expliquer comment la longitude est déterminée, il est nécessaire de comprendre ce qu'est l'équation du temps. On sait que le temps entre deux passages du Soleil dans le plan méridien varie d'un jour à l'autre. La différence par rapport au temps moyen tel que mesuré par une montre est appelée équation du temps. Cette différence correspond à la courbe 50 et peut être lue au moyen de l'échelle graduée 52.

La longitude est l'angle que forment deux plans passant par les pôles, l'un par Greenwich, l'autre par le lieu considéré. Sachant que le mouvement relatif du Soleil et de la Terre a une périodicité de 24 heures, il suffit de connaître le passage du Soleil au méridien du lieu considéré, exprimé en temps de Greenwich, puis de transformer ce temps en un angle - 24 heures correspondant à 360 degrés - pour définir la longitude. Pour ce faire, il est toutefois nécessaire de savoir à quel fuseau horaire se réfère l'heure indiquée par la montre selon l'invention. Cette information est introduite en déplaçant la bague 44 au moyen de la couronne 46, de manière que l'origine 47 se trouve en regard de la valeur de l'échelle graduée 52 correspondant au fuseau horaire dont l'heure est affichée par la montre.

On détermine l'équation du temps au moyen de l'index 48, qu'on place en regard du jour courant. On lit sur l'échelle graduée 52 la valeur de la correction à apporter, donnée par l'intersection de l'index 48 avec la courbe 50. La correction est alors introduite, en déplaçant la bague tournante 44 de manière que l'index soit décalé par rapport au fuseau horaire, d'une valeur correspondant à l'équation du temps.

On définit, de manière approximative, l'orientation du plan méridien, et plus particulièrement la direction du Sud. Lorsque l'observateur veut définir la longitude d'un lieu dans lequel il se trouve, il doit, en outre, disposer d'un moyen permettant de définir la hauteur du Soleil sur l'horizon, de manière à connaître le moment où elle est la plus grande, ce qui correspond au passage au méridien. Il peut, à ce moment-là, lire la longitude sur la bague 44, indiquée par la flèche 26.

Cela peut être fait en posant, sur une surface sensiblement plane, la montre munie du dispositif tel que représenté à la figure 5 et orienté dans la direction du Soleil. L'observateur peut alors voir se déplacer l'image 79 sur la surface dépolie 78. Le passage au méridien correspond au moment où l'image s'arrête et change de sens. Il peut alors lire, à cet instant, la valeur indiquée sur la bague 44 se trouvant en regard de la flèche 26, qui correspond à la longitude.

Si l'on se réfère à la figure 2, on pourra mieux comprendre la procédure. La situation des différents constituants de la montre correspond à une lecture de la longitude à New-York. Cette ville se trouve dans un fuseau horaire retardant de 5 heures par rapport à Greenwich. L'utilisateur place donc la lunette 44 de manière que l'index 47 se trouve en regard de l'indication -5 de l'échelle 33 portée par le cadran 32. La date courante est le 18 juillet. Il ouvre le fond de sa montre et place l'index 48 en regard de cette date t peut ainsi lire l'équation du temps qui correspond sensiblement à une correction de 1,5°. L'utilisateur apporte alors cette correction sur la bague 44, de sorte que l'index de l'échelle 33 portant l'indication -5 se trouve en regard de 1,5° de l'échelle 44.

Dans cette position, l'utilisateur pose sa montre sur une surface plane, de manière que le dispositif de la figure 5 soit sensiblement orienté vers le Soleil. L'image 79 apparaît alors sur la surface dépolie 78. Tant que le Soleil monte sur l'horizon, l'image se déplace en s'éloignant de la surface oblique 66. Lorsque le Soleil a atteint son apogée, l'image s'arrête. A ce moment-là, l'utilisateur peut lire la valeur de la longitude, qui correspond à l'indication se trouvant sur l'échelle 45, en regard de la flèche 26 de l'aiguille des heures 24, soit 72° de longitude ouest.

En variante, non représentée au dessin, le cadran porte une échelle en regard de l'échelle 45, dont les pas sont dans un rapport de 9 à 10, pour définir un vernier permettant d'améliorer la précision dans l'introduction de l'équation du temps. Une solution comparable peut être utilisée pour améliorer la lecture de la longitude en disposant une échelle graduée à l'extrémité de l'aiguille 24, remplaçant la flèche 26.

Comme cela a été expliqué plus haut, l'échelle des longitudes portée par la bague 44 est limitée à 180°. Cela provient du fait que l'aiguille des heures fait deux tours par jours. La montre ainsi décrite permet de mesurer la longitude entre 90° Ouest et 90° Est. Il est toutefois facile de connaître également la longitude pour l'autre moitié de la Terre en prenant le méridien passant par l'antipode de Greenwich comme référence et en ajoutant 180° à la valeur mesurée, les longitudes Est étant considérées comme négatives.

## Revendications

1. Montre destinée à la définition de la longitude d'un lieu, comportant un mobile (16) effectuant un tour en 12 heures et portant une aiguille des heures (24), un mobile effectuant un tour en une heure et portant une aiguille des minutes (28), ainsi qu'un cadran (32), **caractérisée en ce qu'**elle comporte, en outre, une bague tournante (44) pour la lecture de la longitude, portant un repère (47) et, à partir de celui-ci, une échelle (45) en degrés couvrant un angle de 180° sur l'ensemble de son pourtour, **en ce que** le cadran (32) est muni d'une échelle circulaire (33) pour la sélection du fuseau horaire, avec un point médian (35) correspondant au point supérieur du cadran et une graduation couvrant 12 heures sur l'ensemble de son pourtour, la valeur de la graduation de l'échelle en degrés étant égale à 15 fois la valeur de la graduation de l'échelle en heures pour les valeurs se trouvant en regard les unes des autres, lorsque ledit repère (47) coïncide avec ledit point médian (35).

2. Montre selon la revendication 1, **caractérisée en ce que** l'échelle (45) en degrés, s'étend de 0° à 90° de part et d'autre dudit repère et **en ce que** l'échelle circulaire (33) pour la sélection d'un fuseau horaire porte une graduation allant de 0 à + 6 heures ou - 6 heures à partir du point médian (35), selon le sens de rotation.

3. Montre selon la revendication 1 ou 2, **caractérisée en ce que** ladite bague (44) entoure le cadran (32) et **en ce que** l'aiguille des heures (24) est prolongée par une flèche (26) jusqu'au voisinage de la bague (44), de longueur supérieure à l'aiguille des minutes.

4. Montre selon l'une des revendications 1 à 3, **caractérisée en ce qu'**elle comporte, en outre, une surface d'affichage (54) en coordonnées polaires, avec une indication angulaire des mois et des jours de l'année et une indication radiale sous forme de courbe (50) relative à l'équation du temps, et un index (48) monté mobile en rotation en regard de la surface d'affichage et portant une échelle (52) de lecture pour déterminer l'équation du temps.

5. Montre selon la revendication 4, **caractérisée en ce que** ledit index (48) comporte deux bras diamétralement opposés, portant une échelle relative à l'équation du temps, sur l'un en degrés d'angle et sur l'autre en minutes de temps.

6. Montre selon la revendication 4 ou 5, du type comportant une boîte (10) avec un fond (40), **caractérisée en ce que** ledit index (48) est monté mobile dans le fond de ladite boîte.

7. Montre selon l'une des revendications 4 à 6, **caractérisée en ce que** l'échelle (45) portée par la bague (44) comporte des index définissant des fractions de degrés pour des valeurs comprises entre ± 5° de part et d'autre dudit repère, pour faciliter la correction de l'équation du temps.

8. Montre selon l'une des revendications 1 à 7, **caractérisée en ce que** le cadran (32) et la bague (34) portent chacun une échelle définissant un vernier, pour améliorer la précision de correction de l'équation du temps.

9. Montre selon la revendication 8, **caractérisée en ce que** l'aiguille des heures (24) et ladite bague (34) portent chacune une échelle définissant un vernier pour améliorer la précision de lecture de la longitude.

10. Montre selon l'une des revendications 1 à 9, **caractérisée en ce qu'**elle comporte, en outre, un disque (22) effectuant un tour en 24 heures, en synchronisme avec l'aiguille des heures (24) et portant des informations relatives aux points cardinaux.

11. Montre selon l'une des revendications 1 à 10, **caractérisée en ce qu'**elle comporte, en outre, un dispositif pour la détermination de la hauteur du Soleil sur l'horizon comprenant un diaphragme (70) pour définir un rayon lumineux de faible section, une surface dépolie (78) sur laquelle ledit rayon est projeté.

12. Montre selon la revendication 11, **caractérisée** en ce ledit dispositif comporte un corps (60) en matériau transparent, de forme sensiblement prismatique, avec deux faces opposées (62, 64), sensiblement parallèles et une face oblique (66) reliant les deux faces opposées et qui comporte une ouverture (70) transparente, sensiblement centrale, destinée à laisser un rayon solaire pénétrer dans ledit corps et entourée d'une couche opaque (68). dans lequel lesdites faces opposées (62, 64) présentent des surfaces agencées de manière à réfléchir ledit rayon (74, 76), et dans lequel une desdites faces (74) comporte une surface dépolie (78) sur laquelle apparaît une image (79) de l'ouverture (70), qui se déplace en fonction de la hauteur du Soleil.

13. Montre selon la revendication 12, **caractérisée en ce que** ledit dispositif comporte, en outre, une échelle (80) en regard de ladite surface (78), pour faciliter l'évaluation de la hauteur du Soleil.

14. Montre selon la revendication 12 ou 13, **caractérisée en ce que** ledit dispositif est réalisé en verre trempé ou en saphir.

15. Montre selon l'une quelconque des revendications 11 à 14, **caractérisée en ce qu'**elle comporte, en outre, une boîte et un bracelet et **en ce que** ledit dispositif est associé audit bracelet.

## Patentansprüche

1. Uhr zur Bestimmung des Längengrads eines Ortes, bestehend aus einem Rädchen (16), das eine Umdrehung von 12 Stunden vollzieht und einen Stundenzeiger (24) trägt, und aus einem Rädchen, das eine Umdrehung von einer Stunde vollzieht und einen Minutenzeiger (28) und ein Zifferblatt (32) trägt, **dadurch gekennzeichnet, dass** sie unter anderem einen Drehring (44) zum Ablesen des Längengrades enthält, der eine Markierung (47) aufweist, von der aus eine Skala (45) in Grad ausgeht, die einen Winkel von 180° über ihren gesamten Umfang beschreibt und **dadurch gekennzeichnet, dass** das Zifferblatt (32) über eine runde Skala (33) zur Auswahl der Zeitzone mit einem Medianpunkt (35) verfügt, der dem oberen Punkt des Zifferblatts entspricht und mit Inkrementen, die im gesamten Umfang 12 Stunden abdecken, wobei der Wert der Inkremente der Skala in Grad gleich groß ist wie 15 Mal der Wert der Inkremente der Stundenskala für die Werte, die sich jeweils gegenüberliegen, wenn besagte Markierung (47) mit dem besagten Medianpunkt (35) zusammenfällt.

2. Uhr nach Anspruch 1, **dadurch gekennzeichnet, dass** sich die Skala (45) in Grad zu beiden Seiten der besagten Markierung von 0° bis 90° erstreckt und **dadurch gekennzeichnet, dass** die runde Skala (33) zur Auswahl der Zeitzone eine Einteilung von 0 bis +6 Stunden oder bis -6 Stunden ab dem Medianpunkt (35) in Abhängigkeit der Drehrichtung enthält.

3. Uhr nach Anspruch 1 oder 2, **dadurch gekennzeichnet, dass** der besagte Ring (44) das Zifferblatt (32) umgibt und dass der besagte Stundenzeiger (24) über einen Pfeil (26) bis in die Umgebung des Rings (44) verlängert wird und länger ist als der Minutenzeiger.

4. Uhr nach einem der Ansprüche 1 bis 3, **dadurch gekennzeichnet, dass** sie unter anderem eine Anzeigefläche (54) mit den Polkoordinaten mit eckiger Anzeige der Monate und Tage des Jahres und eine radiale Anzeige in Form einer Kurve (50) bezogen auf die Zeitgleichung sowie einen Rückerzeiger (48) enthält, der beweglich drehend gegenüber der Anzeigefläche montiert ist und eine Ableseskala (52) zur Bestimmung der Zeitgleichung enthält.

5. Uhr nach Anspruch 4, **dadurch gekennzeichnet, dass** besagter Rückerzeiger (48) zwei diametral gegenüberliegende Arme enthält, die eine Skala zur Zeitgleichung enthalten, die auf dem Einen in Winkelgrad und die auf dem Anderen in Minuten.

6. Uhr nach Anspruch 4 oder 5 des Typs mit einem Gehäuse (10) und einem Boden (40), **dadurch gekennzeichnet, dass** besagter Rückerzeiger (48) beweglich am Boden des besagten Gehäuses montiert ist.

7. Uhr nach einem der Ansprüche 4 bis 6, **dadurch gekennzeichnet, dass** die vom Ring (44) getragene Skala (45) einen Rückerzeiger enthält, der Gradteile für Werte zwischen ±5° zu beiden Seiten besagter Markierung enthält, um die Korrektur der Zeitgleichung zu vereinfachen.

8. Uhr nach einem der Ansprüche 1 bis 7, **dadurch gekennzeichnet, dass** das Zifferblatt (32) und der Ring (34) jeweils eine Skala enthalten, die eine Feinabstimmung beschreibt, um die Präzision der Korrektur der Zeitgleichung zu verbessern.

9. Uhr nach Anspruch 8, **dadurch gekennzeichnet, dass** der Stundenzeiger (24) und der besagte Ring (34) jeweils eine Skala enthalten, die eine Feinabstimmung beschreiben, um die Präzision des Ablesens des Längengrades zu verbessern.

10. Uhr nach einem der Ansprüche 1 bis 9, **dadurch gekennzeichnet, dass** sie unter anderem eine Scheibe (22) enthält, die synchron zum Stundenzeiger (24) eine Umdrehung von 24 Stunden vollzieht und Informationen zu den Himmelsrichtungen enthält.

11. Uhr nach einem der Ansprüche 1 bis 10, **dadurch gekennzeichnet, dass** sie unter anderem eine Vorrichtung zur Bestimmung der Höhe der Sonne am Horizont mit einer Membran (70) zur Beschreibung eines feinen Lichtstrahls und eine matte Fläche (78) enthält, auf die der Strahl projiziert wird.

12. Uhr nach Anspruch 11, **dadurch gekennzeichnet, dass** besagte Vorrichtung einen Korpus aus transparentem Material umfasst, der deutlich prismaförmig ist, mit zwei sich gegenüber liegenden Seiten (62, 64), die deutlich parallel sind und einer schrägen Seite (66), die die beiden sich gegenüber liegenden Seiten miteinander verbindet und die eine transparente Öffnung (70) hat, die eindeutig in der Mitte liegt und den Zweck hat, den Sonnenstrahl in den besagten Korpus zu lassen und von einer lichtundurchlässigen Schicht (68) umgeben ist, in der die besagten sich gegenüberliegenden Seiten (62, 64) Flächen bilden, die in der Form ausgelegt sind, dass sie den besagten Strahl (74, 76) reflektieren und in der eine der besagten Flächen (74) eine matte Fläche (78) enthält, auf der ein Bild (79) der Öffnung (70) entsteht, das sich in Abhängigkeit des Stands der Sonne verschiebt.

13. Uhr nach Anspruch 12, **dadurch gekennzeichnet, dass** besagte Vorrichtung unter anderem eine Skala (80) enthält, die gegenüber der besagten Fläche (78) liegt, um die Bewertung des Stands der Sonne zu vereinfachen.

14. Uhr nach Anspruch 12 oder 13, **dadurch gekennzeichnet, dass** die besagte Vorrichtung aus, dass besagte Vorrichtung aus thermisch vorgespanntem Glas oder aus Saphir umgesetzt wird.

15. Uhr nach einem der vorhergehenden Ansprüche 11 bis 14, **dadurch gekennzeichnet, dass** sie unter anderem ein Gehäuse und ein Armband enthält und dass besagte Vorrichtung mit dem besagten Armband verbunden ist.

## Claims

1. Watch intended for defining a location longitude, including a wheel (16) completing one revolution in 12 hours and carrying an hour hand (24), a wheel completing one revolution in one hour and carrying a minute hand (28), and a dial (32), **characterised in that** it further includes a rotating ring (44) for reading longitude, bearing an index mark (47) and, therefrom, a scale (45) in degrees covering an angle of 180° over the whole of its periphery, **in that** the dial (32) is equipped with a circular scale (33) for selecting a time zone, with a median point (35) corresponding to the top point of the dial and a graduation covering 12 hours over the whole of its periphery, the value of the graduation of the scale in degrees being equal to 15 times the value of the graduation of the hour scale for the values located opposite each other, when said index mark (47) coincides with said median point (35).

2. Watch according to claim 1, **characterised in that** the scale (45) in degrees, extends from 0° to 90° on either side of said index mark and **in that** the circular scale (33) for selecting a time zone bears a graduation going from 0 to +6 hours or -6 hours from the median point (35), depending on the direction of rotation.

3. Watch according to claim 1 or 2, **characterised in that** said ring (44) encircles the dial (32) and **in that** the hour hand (24) is extended by an arrow (26) up to the vicinity of the ring (44), which is of greater length than the minute hand.

4. Watch according to any of claims 1 to 3, **characterised in that** it further includes a display surface (54) in polar co-ordinates, with an angular indication of the months and days of the year and a radial indication in the shape of a curve (50) relative to the equation of time, and an index (48) mounted to move in rotation opposite the display surface and bearing a reading scale (52) for determining the equation of time.

5. Watch according to claim 4, **characterised in that** said index (48) includes two diametrically opposite arms, bearing a scale relative to the equation of time, on one in degrees of angle and on the other in minutes of time.

6. Watch according to claim 4 or 5, of the type including a case (10) with a back cover (40), **characterised in that** said index (48) is mounted so as to move on the back cover of said case.

7. Watch according to any of claims 4 to 6, **characterised in that** the scale (45) borne by the ring (44) includes indices defining fractions of a degree for values comprised between +5° on either side of said index mark, to facilitate adjustment of the equation of time.

8. Watch according to any of claims 1 to 7, **characterised in that** the dial (32) and the ring (44) each bear a scale defining a vernier, to improve the equation of time adjustment precision.

9. Watch according to claim 8, **characterised in that** the hour hand (24) and said ring (34) each bear a scale defining a vernier to improve longitude reading precision.

10. Watch according to any of claims 1 to 9, **characterised in that** it further includes a disc (22) completing one revolution in 24 hours, in synchronism with the hour hand (24) and bearing data relative to the cardinal points.

11. Watch according to any of claims 1 to 10, **characterised in that** it further includes a device for determining the sun's altitude above the horizon including a diaphragm (70) for defining a light ray of small section, a frosted surface (78) onto which said ray is projected.

12. Watch according to claim 11, **characterised in that** said device includes a body (60) made of transparent material, of substantially prismatic shape, with two opposite substantially parallel faces (62, 64) and an oblique face (66) connecting the two opposite faces and which includes a transparent substantially central opening (70), intended to let a sun ray penetrate said body and surrounded by an opaque layer (68), wherein said opposite faces (62, 64) have surfaces arranged so as to reflect said ray (74, 76), and wherein one of said faces (74) includes a frosted surface (78) on which an image (79) of the opening (70) appears, which moves as a function of the sun's altitude.

13. Watch according to claim 12, **characterised in that** said device further includes a scale (80) opposite said surface (78), for facilitating the evaluation of the sun's altitude.

14. Watch according to claim 12 or 13, **characterised in that** said device is made of tempered plate glass or sapphire.

15. Watch according to any of the claims 11 to 14, **characterised in that** it further includes a case and a wristband and **in that** said device is associated with said wristband.
